# EUROPEAN PATENT APPLICATION

(11) **EP 3 785 544 A1**
(43) Date of publication of application: **03.03.2021**
(21) Application number: 18729000.2
(22) Date of filing: 27.04.2018
(51) Int. Cl.: A23F 5/00, A23F 5/26, A23F 5/28, B01D 11/02

(54) **SYSTEM FOR EXTRACTING A CAFFEINE-RICH POWDER**

(71) Applicant: Bicafé - Torrefecção e Comércio de Café, Lda., 4510-208 S. Pedro da Cova (PT)
(72) Inventor: DE JESUS FERNANDES PUGA, Hélder, 4780-510 Santo Tirso (PT); MOURA DE CASTRO GANDRA, António, 1750 Luxemburgo (LU)
(74) Representative: Ferreira Magno, Fernando Antonio
(86) International application number: PCT/PT2018/000006
(87) International publication number: WO 2019/209127

(57) **Abstract**

The present invention relates to a system for extracting/isolating a caffeine-rich powder from the silverskin which surrounds the coffee seed/bean using an apparatus comprising at least one chamber for premixing distilled water and silverskin (1), one ultrasonic extraction cell (2) comprising at least one module (2a) comprising at least one acoustic transducer (14) and one acoustic radiator (16), at least one mechanical separation tank (3), at least one drying unit (4) and at least one monitoring/control unit of the apparatus (5), wherein the caffeine-rich powder is extracted/isolated as a result of the breakdown of the silverskin molecular structure by the acoustic energy generated by the vibratory movement of the acoustic radiator and actuated by the acoustic transducer, and as a consequence of the caffeine chemical affinity for the distilled water.

## Description

The present invention relates to a system for extracting a caffeine-rich powder (caffeine content greater than 90%) from the silverskin, which is extremely efficient and clean because it does not involve the use of solvents.

The silverskin is a tegument covering the green grain of the coffee; during the coffee roasting process, the seed expands and the silverskin is broken and released, being collected as a by-product and treated generally in the coffee industry as a residue.

The silverskin contains caffeine and bioactive compounds in its composition.

The present invention enables the extraction and isolation of the caffeine contained in the silverskin composition using a non-solvent process that is purely physical in nature, whereby no effluent is produced other than the effluent already generated as a result of the treatment of the silverskin itself as residue, and is therefore an environmentally clean process; a solution made of silverskin and distilled water is subjected to ultrasound under such conditions that result in the breakdown of the molecular structure of the silverskin and isolation of the caffeine, the remainder comprising of other bioactive compounds; due to the chemical affinity of the caffeine for distilled water, these two compounds become separated from the other compounds in solution; the water is subsequently removed by evaporation and the end result of the process is the isolation of a powder comprising more than 90% pure caffeine and the remainder being bioactive compounds, which can be used to increase the caffeine content of a coffee or tea capsule, or any other beverage to which caffeine may be added to enhance its stimulating effects.

Scientific studies have shown that caffeine-enriched beverages have a stimulating effect that is not harmful to human health and for this reason are increasingly sought after by highly active people, such as sportsmen and high performance professionals, so encouraging the development of systems for caffeine isolation in order to be used in the above application(s).

The growing use of caffeine and other bioactive compounds in the preparation of the so-called energy drinks has led to a highly prominent status for caffeine in society, resulting in an increased investment in R&D aimed at its isolation, and triggering efforts to increase its production, preferably using alternatives involving the utilization of the by-products of roasted coffee, thus offsetting the effects of coffee roasting on the environment.

The present invention can be applied in any field where there is a need for isolating compounds by breaking down their molecular structure using acoustic energy, the technical solution underlying the present invention corresponding to one amongst a number of possible embodiments, which was designed specifically for isolating the caffeine from silverskin.

To date, the most effective process for the extraction of caffeine from coffee is carried out with the aid of organic solvents (Ramalakshmi and Raghavan, 1999) by means of a chemical process.

This process, however, has become essentially ineffective due to the use of chemical compounds and the production of effluents; the increasing legal requirements regarding the treatment of these effluents and associated high costs undermine the economic viability of this process on an industrial scale; in addition, it is a time-consuming process, requiring large quantities of solvents and high temperature (s) .

More recently, cleaner alternatives have been proposed, including the use of supercritical carbon dioxide (Azevedo *et al*., 2008) and subcritical water (Bilbao, *et al.,* 2012, Narita and Inouye, 2012), with EP2730171 of Bilbao et al. mentioning the use of subcritical water as an alternative process. Narita and Inouye (2012), however, proved that most of the caffeine and bioactive compounds can be extracted with water at 25 °C without the need for higher temperatures, and Bilbao et. al. (2012) also found no significant differences between the contents of caffeine and bioactive compounds extracted with water at 50 °C and at 100 °C.

Both studies report even a decrease in the content of caffeine and bioactive compounds extracted at higher temperatures, thus suggesting that there is no need to use subcritical water, the latter actually inhibiting extraction, and decided instead for the viable option of using water under atmospheric pressure.

The processes referred to in the two immediately preceding paragraphs are however very costly and result in the isolation of only a small part of the caffeine contained in the silverskin, thus being economically non-viable on an industrial scale;

A number of other state-of-the-art solutions have been identified, but failed to meet all the requirements met by the present invention relating to the isolation of the caffeine contained in the silverskin for subsequent enrichment of beverages, in a clean and environmentally sustainable fashion without the need to use any organic solvents, and economically viable on an industrial scale as well as producible on a continuous basis.

The use of ultrasound in the extraction of chemical compounds from natural matrices is described as faster and more efficient in comparison to the traditional extraction methods, while still allowing for a decrease in the use of organic solvents (Albu et al. , 2004).

Albu *et al.,* (2004) were the first to use ultrasound as a means of extracting caffeine from the leaf of the coffee plant (*Rosmarinus officionalis*)*,* but the system they developed also used organic solvents and is therefore not an environmentally clean process; in addition, the said procedure is not very productive and is therefore not viable on an industrial scale.

Wang et al. (2011) presented work related to the extraction of flavour and caffeine from coffee beans; although this extraction system contemplates caffeine and bioactive compounds, these are extracted directly from the coffee bean and not from the silverskin as is the case with the present invention. In addition, the material - the coffee bean - must be milled prior to the extraction process, with the indicated operating frequencies of the ultrasound varying between 28 and 42 kHz, which are seemingly difficult values to achieve in practice.

In view of the current state of the art, there is thus a need for a new clean, fast and efficient system of extraction of caffeine from silverskin, which operates continuously and is economically feasible on an industrial scale.

The present invention aims to provide a system for extracting a caffeine-rich powder having a caffeine content greater than 90% with the remainder comprising bioactive compounds, which includes one or more mixing chambers, one or more ultrasonic extraction cells using acoustic transducers, one or more tanks for separating water and caffeine and bioactive compounds from the other organic compounds contained in the silverskin, and one or more drying systems for evaporating the water, resulting in the isolation of a powder rich in caffeine and bioactive compounds; this is an innovative concept combining a set of elements and techniques which enable a fast, efficient and continuous separation and collection of a powder rich in caffeine from the aqueous solution.

The solution proposed by the present invention involves the extraction of caffeine from silverskin by acoustic energy, using the basic principles underlying ultrasound technology, such as the transformation of electrical energy supplied by a wave generator into high frequency mechanical impulses caused by the displacement of the piezoelectric material of the transducers. In addition, in order to transfer these mechanical impulses to the solution comprising of distilled water and silverskin, a set of mechanical elements, such as amplitude amplifiers, waveguides and acoustic radiators, is included, so as to increase the mixing/extraction efficiency of the caffeine and bioactive compounds, i.e., a cell comprising the elements described above allows the creation of a specific acoustic field capable of inducing in the mixture of distilled water and silverskin a field of pressures sufficiently high to induce such phenomena as cavitation and acoustic beams, sufficient for improving the homogenization of the mixture, as well as for extracting a caffeine-rich powder from the silverskin. According to established theory, when mechanical impulses induced in an aqueous medium generate sufficient acoustic intensity in the medium, phenomena such as cavitation and, consequently, acoustic flows, begin to appear, giving rise to mass transfer.

The alteration of the aqueous medium produced by the acoustic effects (cavitation and acoustic beams) provides a better and complete penetration by the distilled water into the silverskin, thereby improving mass transfer, that is, the acoustic waves generated during cavitation are capable of breaking the cell walls of the silverskin, facilitating the release of the natural matrix compounds, including caffeine and other bioactive compounds.

More specifically, the extraction and respective process of obtaining caffeine and bioactive compounds is carried out by the acoustic energy processing of the mixture of distilled water and silverskin in a continuous fashion, from a mixing tank of distilled water and silverskin; the mixture of water and caffeine and bioactive compounds as well as the other particles from the extraction cell(s) is subjected to a mechanical separation system, e.g., a hydrocyclone, for the separation and removal of particles in the form of slurries; the aqueous solution rich in caffeine from the mechanical separation system is processed in a drying unit, e.g., a greenhouse or a sprayer, for separating the water from the powder rich in caffeine and other bioactive compounds.

The extraction system described here improves the extraction efficiency by using an acoustic energy extraction cell comprising at least one module, each module comprising at least one acoustic transducer and an acoustic radiator, with mixing/extraction/homogenization characteristics and optimized according to the intended purpose. Being used more than an acoustic transducer and an acoustic radiator in the same module, all these function independently and in a variable frequency range, preferably between 19 and 21 kHz. The combination of the effects produced by the two or more acoustic transducers promotes more efficiently, and with better yields, the extraction of a powder rich in caffeine.

Each acoustic energy extraction cell included in the extraction apparatus has a production capacity that is a function of its volume, the preferred volume being 5 to 20 liters, capable of generating a flow-rate of 0,05 to 31 liters/minute and processing 0,1 to 0,6 m³/hour of silverskin/distilled water solution.

In addition, the use of ultrasound, via at least one extraction cell, enables the processing of the silverskin without the need for prior milling and/or grinding, as is observed in the conventional extraction process using solvents. In addition to this advantage, the present invention provides a set of elements which, when combined and connected together, enables the maximization of the caffeine-rich powder extraction with a reduced number of process steps, as well as with reduced production costs.

A detailed embodiment of the present invention is now described without intending to be limiting and by way of example.

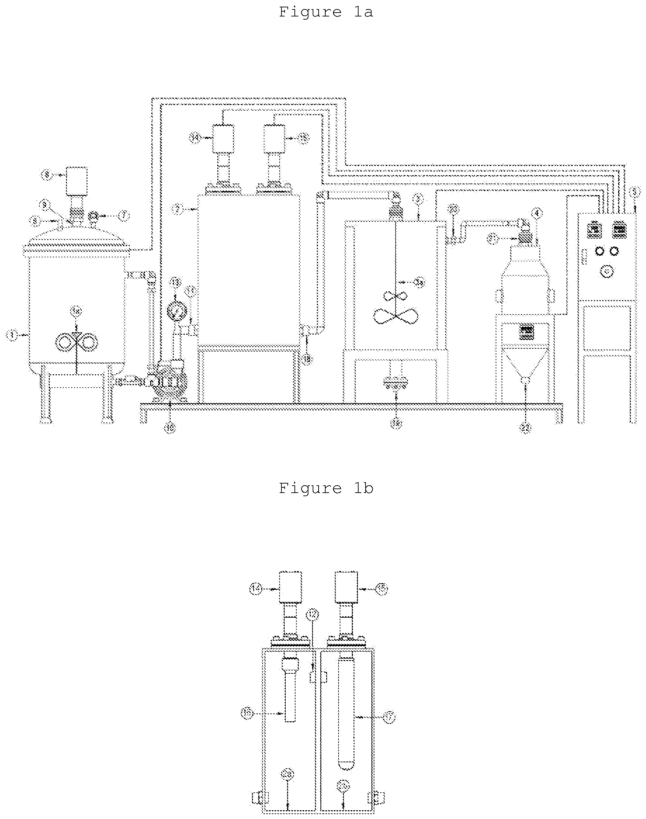

In Figure 1a and Figure 1b is shown schematically and in simplified form an embodiment of the extraction system of the powder rich in caffeine and bioactive compounds according to the present invention.

The silverskin caffeine-rich powder extraction system according to the present invention comprises a chamber for pre-mixing the distilled water and the silverskin (1), an ultrasonic extraction cell (2) comprising two modules (2a) and (2b), a tank (3) with a mechanical separation system (3a), a drying unit (4) and an apparatus control unit (5).

Distilled water is introduced into the premixing chamber (1) via valve (6) and the silverskin, as obtained in the coffee roasting, i.e., without any prior processing including milling or grinding, is introduced by valve (7); premixing of the distilled water and silverskin is achieved by the action of a rotating blade (1a), an acoustic transducer (8) and an acoustic radiator (9) with mixing characteristics, namely of cylindrical shape and flat top, with a diameter varying between 30 and 60 mm, preferably between 50 and 60 mm, and a variable wavelength in the range of 4 to 14 HWL (wavelength in mm), preferably between 7 and 9 HWL.

The distilled water and silverskin premixture is pumped from chamber (1) into extraction cell (2) by means of a variable-flow pump (10).

The distilled water and silverskin premixture enters module (2a) of extraction cell (2) via electrovalve (11) and passes to module (2b) via electrovalve (12). Flow meter/regulator (13) allows for variation in the volume/time ratio of the distilled water and silverskin mixture exposed to the acoustic intensities generated by the two acoustic transducers (14) and (15) present in the modules (2a) and (2b) respectively.

In the first extraction module (2a) the mixing/extraction of the distilled water and silverskin premixture is carried out using acoustic transducer (14) and acoustic radiator (16) having mixing/extraction characteristics, namely of cylindrical shape and flat top (sonotrode), with a diameter of between 20 and 60 mm, preferably between 50 and 60 mm, and a variable wavelength ranging from 3 to 9 HWL (wavelength in mm), preferably between 5 and 7 HWL;

In the second extraction module (2b) the extraction/homogenization of the distilled water and silverskin mixture from the extraction module (2a) is effected using acoustic transducer (15) and acoustic radiator (17) having extraction/homogenization characteristics, namely of cylindrical shape and spherical top (sonotrode), with a diameter between 20 and 60 mm, preferably between 50 and 60 mm, and a variable wavelength between 3 and 9 HWL (wavelength in mm), preferably between 5 and 7 HWL.

The acoustic transducers (9), (14) and (15) operate in the frequency range of 19 to 21 kHz, preferably of 19,5 to 20,5 kHz; the acoustic radiators (9) and (14) emit axial waves while the acoustic radiator (15) emits radial waves;

In module (2a) the mixture of distilled water and silverskin is exposed to an acoustic intensity of between 80 and 650 W/cm² and to an acoustic energy varying between 50 and 600 W/l, dissipated axially and mainly through the top of the acoustic radiator (16), in hammer effect;

In module (2b) the mixture of distilled water and silverskin is exposed to an acoustic power density of between 1 and 10 W/cm³ and a variable acoustic energy of between 50 and 600 W/l, dissipated radially over of the surface of the acoustic radiator (17);

Ultrasounds result in the breakdown of the molecular structure that makes up the silverskin, and the caffeine is isolated by dissolution into water, given the chemical affinities that the molecular structure of caffeine has for the molecular structure of water; this effect, obtained by a purely physical process, avoid the need for prior grinding of the silverskin in the present invention, and more importantly, avoid the need for the use of solvents, so making it a clean, non-effluent generating process.

After exposure to the acoustic effect produced by the acoustic radiators (9), (16) and (17), the aqueous solution of powder rich in caffeine and bioactive compounds passes via electrovalve (18) to the tank (3), through the mechanical separation system (3a) in which the agglomerated particles are removed in the form of slurries, which are then transferred under pressure into filter press (19), by which they are withdrawn from the system.

The aqueous solution of caffeine-rich powder from tank (3) passes through electrovalve (20) into feed (21) of drying system (4); the aqueous suspension of powder rich in caffeine is subjected to a water removal process in the drying unit (4); this removal should be carried out at a temperature not exceeding 50 °C and a pressure below 20 bar in order to allow drying of the aqueous solution and to obtain a concentrated powder rich in caffeine with unaltered qualities (22).

The control unit (5) enables automatic and continuous control of all process parameters, including flow-rates, time of exposure of the aqueous solution to acoustic radiation, and temperature monitoring.

The present invention has the following advantages:
a. makes use of the silverskin, as a by-product of coffee roasting, which is usually discarded;
b. avoid the need for milling or grinding of the silverskin, as a prior step of the extraction process;
c. allows for the continuous extraction of a powder rich in caffeine and bioactive compounds through an extremely efficient solvent-free process which does not produce effluents that need to be treated, thus being environmentally clean, producing no solid residue other than that already produced during the full treatment of silverskin;
d. maximizes the extraction of a powder rich in caffeine from the silverskin in a reduced number of steps and in an autonomous and continuous fashion, so reducing costs and production times;
e. houses acoustic radiators and transducers in separate modules, which operate autonomously, providing different acoustic effects according to the geometries used.

### LEGENDS:

1 - Chamber
1a - Rotating blade
2 - Ultrasonic extraction cell
3 - Tank
3a - Mechanical separation system
4 - Drying unit
5 - Apparatus control unit
6 - Distilled water supply valve
7 - Silverskin supply valve
8 - Acoustic transducer
9 - Acoustic radiator
10 - Variable-flow pump
11 - Electrovalve
12 - Electrovalve
13 - Flow-meter
14 - Acoustic transducer
15 - Acoustic transducer
16 - Acoustic radiator
17 - Acoustic radiator
18 - Electrovalve
19 - Filter press
20 - Electrovalve
21 - Electrovalve
22 - Collection of caffeine-rich powder

### Bibliography

Albu et. al. (2004) . Potential for the use of ultrasound in the extraction of antioxidants from Rosmarinus officinalis for the food and pharmaceutical industry. Ultrasonics Sonochemistry 11: 261-265.
Azevedo et. al. (2008). Extraction of caffeine, chlorogenic acids and lipids from green coffee beans using supercritical carbon dioxide and co-solvents. Brazilian Journal of Chemical Engineering 25: 543-552.
Bilbao et. al. (2012). Application of products of coffee silverskin in anti-ageing cosmetics and funtional food. Espanha. Disponivel em: https://www.google.com/patents/EP2730171A1?cl=en Costa et. al. (in press) . Nutritional, chemical and antioxidant/pro-oxidant profiles of silverskin, a coffee roasting by-product. Food Chemistry
Narita and Inouye. (2012). High antioxidant activity of coffee silverskin extracts obtained by the treatment of coffee silverskin with subcritical water. Food Chemistry 135: 903-909.
Ramalakshmi and Raghavan. (1999). Caffeine in Coffee: Its Removal. Why and How? Critical Reviews in Food Science and Nutrition 39: 441-456.
Sheu et. al. (2009). Influence of extraction manufacturing process on caffeine concentration. Proceedings of the International MultiConference of Engineers and Computer Scientists Hong Kong.
Wang et. al. (2011). Application of ultrasound thermal process on extracting flavor and caffeine of coffee. Thermal Science 1: S69-S74.

## Claims

1. A system for extracting a caffeine-rich powder from the silverskin surrounding the coffee seed/bean, which comprises a caffeine-rich powder extraction apparatus as well as the respective process for obtaining the same, **characterized in that** said extraction apparatus comprises at least one chamber for premixing of distilled water and silverskin (1) comprising at least one rotating blade (1a), one extraction cell (2) comprising at least one module (2a) comprising at least one acoustic transducer (14) and one acoustic radiator (16), at least one mechanical separation tank (3), at least one drying unit (4) and one apparatus monitoring/control unit (5), wherein the caffeine-rich powder is extracted/isolated by the breakdown of the silverskin molecular structure and due to the caffeine chemical affinity for water, comprising the following steps:
introducing distilled water into chamber (1) via valve (6) and the untreated silverskin via valve (7), the premixing of distilled water and the silverskin being carried out at least by the action of a rotating blade (1a),
said premixture of distilled water and silverskin being pumped from chamber (1) into ultrasonic extraction cell (2) via a variable-flow pump (10), entering at least one module (2a) via electrovalve (11), the ratio volume/time of the water and silverskin mixture being controlled by flow meter/regulator (13),
exposing the mixture of water and silverskin, in at least one module (2a), to the effect of the acoustic energy provided by at least one acoustic transducer (14 and 15) and one acoustic radiator (16 and 17) in each module;
after exposure to the acoustic effect in at least one extraction cell module, the aqueous solution of caffeine and bioactive compounds is transferred to at least one tank (3) provided with a mechanical system (3a) for separation of the particles in the form of slurries, the slurry being sent to at least one filter press (19) for removal of the solids fraction and the remaining aqueous solution being sent to the drying unit (4), whereby the caffeine-rich powder is obtained by evaporation of the water.
